# EUROPEAN PATENT APPLICATION

(11) **EP 4 047 542 A1**
(43) Date of publication of application: **24.08.2022**
(21) Application number: 19952605.4
(22) Date of filing: 18.11.2019
(51) Int. Cl.: G06Q 50/04, G06Q 30/06, A41H 1/02, A41H 3/00, G06Q 30/02, H04M 1/725, G06F 30/00

(54) **SYSTEM FOR MANUFACTURING UNDERWEAR CUSTOMIZED FOR CUSTOMER**

(30) Priority: 11.11.2019 KR 20190143686
(71) Applicant: Yeom, Jang Yul, Gangdong-gu Seoul 05340 (KR)
(72) Inventor: Yeom, Jang Yul, Gangdong-gu Seoul 05340 (KR)
(74) Representative: BCKIP
(86) International application number: PCT/KR2019/015761
(87) International publication number: WO 2021/095951

(57) **Abstract**

A system for manufacturing underwear customized for a customer may: generate a 3D body shape of a customer by 3D scanning; calculate, from the 3D body shape, unique body measurement information for each customer, needed for manufacturing customized underwear, and register the information; and then, if a customized purchase request for underwear is received from the customer, generate, for the target underwear requested for purchase, a design that fits the body shape of the customer on the basis of the registered body measurement information for each customer; and thereby maximize customer satisfaction and reduce an inventory.

## Description

### Technical Field

The present disclosure relates to the manufacture of underwear and, more particularly, to a system for manufacturing customized underwear for a customer, which generates a 3D body shape of a customer through 3D scanning, calculates, from the 3D body shape, unique body size information for each customer, needed for manufacturing customized underwear, and registers the information, and then, if a customized purchase request for underwear is received from the customer, generates, for the target underwear requested for purchase, a design that fits the body shape of the customer on the basis of the registered body size information for each customer, and thereby maximizes customer satisfaction and reduces inventory.

### Background Art

Underwear generally refers to items of clothing such as bras and panties which is worn for the purpose of covering and protecting the genitals.

Underwear is clothing that is in direct contact with the skin, for which comfort and fit should be considered key. However, in the current mass-production situation, underwear is produced only in a select set of sizes according to a limited number of standards, without taking into account individuals' different body shapes at all.

This leaves customers no other option but to pick out an item they think most fit their body shape from a usual collection of underwear that come in fixed sizes, and thus it is hard to expect that the customers will get satisfaction in comfort and fit when they wear it. Moreover, each underwear brand has a different standard for underwear sizes, making the sizes slightly different from other brands, and the customer will find it difficult to choose the right size.

Among underwear, especially bras, which are worn by women, do not come in various sizes. Nowadays, more and more bras are made to push the breasts up and together, with designs focusing on aesthetic appeal, but customers wearing these bras tend to have low satisfaction in comfort and fit.

For example, wearing bras on a daily basis may cause a lot of stress on the woman's body, and this stress can be the cause of symptoms such as indigestion, restricted breathing, impediment to blood flow, and so on and even deform the woman's body. This can happen when women wear the wrong bra size for a long period of time under the current circumstances where there is no customized underwear available in the market.

Men also often feel discomfort from underwear which they wear every day and all day long, because the underwear is not custom-made for individuals no matter what size they find that appears to best fit their body. For example, one may feel discomfort on the waist wearing an L size, while other people wearing this L size may feel loose on the thighs. Or else, in some men, the same L size may be tight on the thighs but loose on the waist, or may feel discomfort only on the buttocks.

Meanwhile, many companies are recently emerging to manufacture underwear in various sizes in order to resolve the customer satisfaction with the current underwear sizing systems. However, given the increase in the cost of manufacturing underwear in various sizes, there has been no significant improvement in customer satisfaction.

In view of this, customized underwear may be manufactured based on each customer's correct body size information which is correctly calculated by three-dimensionally scanning the customer's body, with an anticipation that customer satisfaction will be improved a lot, and that the problem of inventory in mass production will be solved.

### SUMMARY

Accordingly, the present disclosure provides a system for manufacturing underwear customized for a customer, which generates a 3D body shape of a customer through 3D scanning, calculates, from the 3D body shape, unique body size information for each customer, needed for manufacturing customized underwear, and registers the information, and then, if a customized purchase request for underwear is received from the customer, generates, for the target underwear requested for purchase, a design that fits the body shape of the customer on the basis of the registered body size information for each customer, and thereby maximizes customer satisfaction and reduces inventory.

The aspects of the present disclosure are not limited to the above-mentioned one, and other aspects and advantages not mentioned herein will be understood by the following description and more clearly understood by embodiments of the present disclosure. It will also be readily apparent that the aspects and advantages of the present disclosure may be implemented by means described in claims and a combination thereof.

In accordance with an aspect of the present disclosure, there is provided a system for manufacturing underwear customized for a customer, the system comprising: a body size measurement device that generates a three-dimensional body shape of a customer by three-dimensionally scanning a body of the customer, selects a preset number of points required to design a type of underwear that fits the body shape of the customer, among points making up the three-dimensional body shape, and calculates body size information of the customer based on coordinate data values of the selected points; and an underwear manufacturing server connected to the body size measurement device via a wired or wireless communication network, that receives the body size information of the customer, who has signed up on the underwear manufacturing server, and manufactures customized underwear based on the body size information, wherein the underwear manufacturing server comprises: a communication part connected to the wired or wireless communication network to transmit and receive data to and from the body size measurement device; a first information collection part connected to the body size measurement device through the communication part to collect the customer's body size information; a second information collection part that, upon receiving a purchase request for customized underwear through the customer's user terminal, collects order information including information on age and sex of the customer who has sent the purchase request, underwear category information, and information on target underwear the customer wants to order; a basic design information extraction part that, upon receiving the purchase request from the customer, recognizes the membership information of the customer and extracts the body size information that is previously collected for the customer, from among body size information of a plurality of customers; a first design creation part that creates a first design that fits the body shape of the customer by extracting a basic design for the target underwear and modifying the basic design based on the customer's body size information; a design correction information collection part that transmits to a user terminal of the customer the first design and a plurality of design correction items to be applied to the first design and asks the customer to enter design correction option information the customer wants in the design correction items, and then collects the design correction option information chosen through the customer's user terminal; and a second design creation part that creates a second design by modifying the first design based on the design correction option information chosen by the customer.

Further, the underwear manufacturing server may further include a design margin calculation part that collects dissatisfaction information from the customer with respect to the target underwear manufactured according to the second design and calculates a certain margin for the data value of each item to improve the customer's satisfaction, wherein the first design creation part continuously updates the first design for the target underwear by applying the certain margin to the data value of each item.

The design correction items may comprise a design correction item, a body shape correction item, and a physical change correction item, wherein the design correction information collection part collects the design correction option information the customer chooses from each option bar included in the design correction items, and the second design creation part creates the second design by modifying the first design based on the design correction option information chosen by the customer.

Further, when the customer enters design correction option information in each option bar included in the design correction items, the design correction information collection part may modify an image of the target underwear displayed as the first design on the customer's user terminal to match the design correction option information and displays the modified image on the customer's user terminal.

Further, upon receiving the purchase request, the second information collection part may display an order entry box showing various order information option bars where the customer inputs order information, and collects the order information based on information chosen by the customer through the order information option bars.

Further, in collecting information on the target underwear, when an underwear category is chosen through an underwear category option bar which is one of the order information option bars on the order entry box, the second information collection part may display design images of all types of underwear registered in the chosen underwear category and then collects, as the target underwear, the type of underwear corresponding to a design image chosen by the customer, among the design images of all types of underwear.

Further, the underwear manufacturing server may further include: a rating collection part that collects ratings fed back from purchasers of each type of underwear; and a design extraction part that calculates preference scores for each type of underwear by sex and age based on sales of each of all types of underwear registered for each underwear category and the ratings and then extracts a preset number of types of underwear that match the customer's sex and age, wherein, in collecting the target underwear information, when an underwear category is chosen through the underwear category option bar which is one of the order information option bars on the order entry box, the second information collection part displays design images of the preset number of types of underwear, among all types of underwear registered in the chosen underwear category, and then collects, as the target underwear, the type of underwear corresponding to one design image chosen by the customer, among the design images of all types of underwear.

Further, the underwear manufacturing server may further include a purchase history information DB storing purchase information of previous purchasers of each type of underwear, and the design extraction part calculates sales of each type of underwear by sex and age based on the sexes and ages of purchasers of each type of underwear stored in the purchase history information DB.

Further, the design extraction part may calculate an average of ratings from a plurality of purchasers for each type of underwear collected by the rating collection part and produce the average rating as a final rating for each type of underwear.

Further, the design extraction part may update the final rating by continuously taking, from the rating collection part, inputs of ratings fed back from purchasers of each type of underwear upon each purchase.

Further, the design extraction part may calculate a first preference score for each type of underwear by sex and age in such a way as to be proportional to the sales of each type of underwear, and check whether the average rating of each type of underwear exceeds or is less than a median value which is a criterion for positive and negative ratings, and when the average rating of each type of underwear is greater than the median value due to positive ratings therefor, the design extraction part may calculate a second preference score by applying a preset first ratio to the ratings greater than the median value and then adds together the first preference score and the second preference score to calculate a preference score for each type of underwear by sex and age.

Further, when the average rating of each type of underwear is less than the median value due to negative ratings therefor, the design extraction part may calculate a third preference score by applying the first ratio to the ratings less than the median value and then subtract the third preference score from the first preference score to calculate a preference score for each type of underwear by sex and age.

Further, the underwear manufacturing server may further include a design app provision unit that allows an underwear design app to be downloaded onto the customer's user terminal to enable communication with the underwear manufacturing server and installed on the customer's user terminal, and the design correction information collection part may transmit, to the customer's user terminal where the underwear design app is enabled, the first design and a plurality of design correction items to be applied to the first design and collect the design correction option information chosen through the customer's user terminal.

Further, the underwear design app has a rating menu section through which a rating for the target underwear manufactured according to the second design is input, wherein the rating menu section is enabled for a preset length of time after confirmation of the purchase of the target underwear to allow the customer to input a rating for the target underwear, and the rating from the customer is transmitted to the underwear manufacturing server through the customer's user terminal and collected by the rating collection part.

Further, the underwear category may include a bras category or a panties category.

Further, the second design may be generated as a three-dimensional design that corresponds to the customer's three-dimensional body shape, and the system may further comprise a patternmaking device connected to the underwear manufacturing server, that receives the second design from the second design creation part and performs pattern making to manufacture the target underwear according to the second design, wherein the patternmaking device may comprise: a flat design creation part that converts the second design into a flat design, in order to perform flat patterning according to the three-dimensional second design; and a patternmaking part that performs flat patterning for the target underwear corresponding to the second design by cutting fabric for the target underwear based on the flat design.

Further, the underwear manufacturing server may further include a returns handling part that processes a return request for the target underwear manufactured according to the second design, and the underwear design app has a returns menu section through which the customer can request a return of the target underwear manufactured according to the second design, wherein the returns menu section is enabled for a preset length of time after completion of the delivery of the target underwear to allow the customer to make a return request for the target underwear, wherein the return request is transmitted to the underwear manufacturing server through the customer's user terminal and collected by the returns handling part, and wherein the return handling part performs a return process for free only when the return request is the first return request for the target underwear.

### Effect of Invention

According to an embodiment of the present disclosure, in a system for manufacturing customized underwear for a customer, it is possible to generate a 3D body shape of a customer through 3D scanning, calculate, from the 3D body shape, unique body size information for each customer, needed for manufacturing customized underwear, and register the information, and then, if a customized purchase request for underwear is received from the customer, generate, for the target underwear requested for purchase, a design that fits the body shape of the customer on the basis of the registered body size information for each customer, and thereby maximize customer satisfaction and reduce inventory.

A specific effect of the present disclosure, further to the above-mentioned effect, is described together while describing specific matters to implement the present disclosure.

### BRIEF DESCRIPTION OF THE DRAWINGS

FIG. 1 shows a network configuration of a system for manufacturing customized underwear for a customer according to an embodiment of the present disclosure.
FIG. 2 is a view exemplifying an order entry box according to an embodiment of the present disclosure.
FIGS. 3 and 4 are views exemplifying a screen displayed on a user terminal, for entering design correction option information, according to an embodiment of the present disclosure.
FIG. 5 is a detailed block diagram of a customized underwear manufacturing server according to an embodiment of the present disclosure.
FIG. 6 is a detailed block diagram of a patternmaking device according to an embodiment of the present disclosure.
FIG. 7 is a control flow diagram of the operation of an underwear manufacturing server according to an embodiment of the present disclosure.
FIGS. 8 to 10 are views exemplifying a customer's three-dimensional body shape generated by a body size measurement device according to an embodiment of the present disclosure.
FIG. 11 is an exemplary view of fabric pattern pieces drafted based on a flat design according to the conventional art.
FIG. 12 is an exemplary view of fabric pattern pieces drafted based on a three-dimensional design according to an embodiment of the present disclosure.

### DESCRIPTION OF EXEMPLARY EMBODIMENTS

Hereinafter, operating principles of the present disclosure will be described fully with reference to the accompanying drawings. While describing the disclosure, detailed description of related well-known functions or configurations may be omitted when it is deemed that they may unnecessarily obscure the essence of the disclosure. Also, terms used below are defined in consideration of functions in the disclosure, and may have different meanings according to an intention of a user or operator, customs, or the like. Thus, the terms should be defined based on the description throughout the specification.

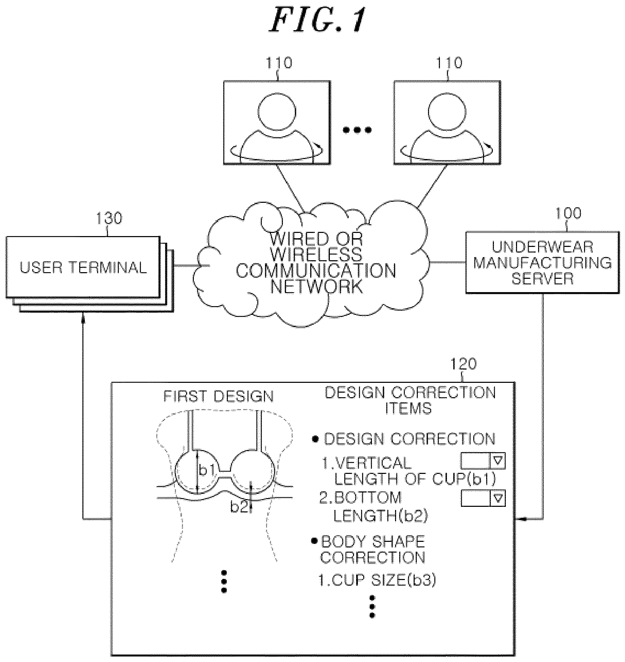

FIG. 1 shows a network configuration of a system for manufacturing customized underwear for a customer according to an embodiment of the present disclosure.

Referring to FIG. 1, the operation of each element in the network configuration of the system for manufacturing customized underwear for a customer according to an embodiment of the present disclosure will be described in more detail below.

First, a user terminal 130 may refer to a wired or wireless terminal of a customer who accesses an underwear manufacturing server 100 connected to a wired or wireless communication network including the internet and make a request to manufacture customized underwear.

The user terminal 130 may be, but not limited to, a communication device such as a computer equipped with a web browser or the like, a mobile communication terminal, a personal digital assistant (PDA), and a TV with an internet access function.

That is, the customer may access a webpage or the like implemented for the sale of customized underwear in the underwear manufacturing server 100 by using the user terminal 130 and signs up for the webpage, and then may enter various kinds of order information required for the manufacture of customized underwear in an order entry box or the like provided on the webpage to make a request to customize underwear as they like, for each underwear category such as bras or panties.

The above order information may include the category of underwear to be customized, the number of purchases, target underwear information, the customer's sex and age, and so forth.

In this instance, the customer may access the webpage of the underwear manufacturing server 100 through the user terminal 130, choose a category of underwear they want, that is, bra or panty, choose a design they want in that category, and make a request to customize underwear as they like according to body size information based on their three-dimensional body shape pre-registered on the underwear manufacturing server 100. According to an embodiment of the present disclosure, the customer's body size information pre-registered on the underwear manufacturing server 100 may be obtained when the customer has their body size information measured in advance by a body size measurement device 110 installed in a department store, a swimming pool, a shopping mall, a public building, etc., and the customer's body size information measured by the body size measurement device 110 may be transmitted to and registered on the underwear manufacturing server 100 connected via a wired or wireless communication network, but the present disclosure is not limited to this. The operation of the body size measurement device 110 will be described in detail. Moreover, the above body size measurement device 110 may be mounted on a mobile object such as a vehicle by a business entity who administers the underwear manufacturing server 100 so that measurements can be made at a place where the customer is located, rather than being placed in a fixed location.

In addition, according to another embodiment of the present disclosure, the underwear manufacturing server 100 may create a first design for target underwear ordered by the customer that fits the customer's body shape, based on the body size information of the customer who made the order, and provides it to the customer. Then, the customer may request to create a second design that suits the customer's preferences by entering additional design correction option information they want in the first design.

The design correction option information may refer not to information for the manufacture of functional underwear for squeezing the body tightly, that is, functional underwear for artificially shaping the body, in addition to underwear offered in standardized sizes by conventional brands, but to additional information the customer enters in the first design to have their underwear customized to whatever length, surface area, volume, etc. the customer wants them to be for each part of the underwear, but the present disclosure is not limited to this.

In entering design correction option information, a menu screen presented by the underwear manufacturing server 100 as indicated by reference numeral 120 may be displayed on the customer's user terminal 130, and the menu screen 120 may be implemented such that the customer chooses desired design correction information from each option bar, but the present disclosure is not limited to this.

The design correction information may refer to an item the customer wants to have corrected in the first design created by the underwear manufacturing server 100. Information contained in the design correction item may be, for example, design correction information, body shape correction information, or physical change information. For bras, the design correction may refer to a correction such as correcting the surface area, volume, size, horizontal length, vertical length, etc. of cups covering the breasts or shortening or lengthen the bottom length of the cups. The body shape correction may refer to a correction such as enhancing volume and cleavage by shaping the cups to make the breasts look fuller. For example, if the customer sets the protruding length of the cups (which may refer to the length the cups protrude from the center line of the body when viewed from the side), the underwear manufacturing server 100 may create the volume the customer wants their breasts to have by calculating the thickness, size, etc. of a padding material to be inserted into each part of the cups based on a three-dimensional shape of the breasts of the customer which is contained in the customer's body size information.

The physical change correction may refer to a correction that is made by a female customer who requests to alter the cup size by checking Menstruation in the design correction option information if their breast size tends to change during a particular period of time such as their menstruation. In this case, the customer may have had their body size information measured in advance during their period by the body size measurement device 110 and registered in the underwear manufacturing server 100, along with their body size information measured at normal times. Thus, if a physical change correction option such as Menstruation is entered as the design correction option information, the underwear manufacturing server 100 may extract the body size information registered during the customer's menstruation and design a bra that can be adapted to physical changes during menstruation.

In this case, an underwear design app developed according to an embodiment of the present disclosure may be installed on the user terminal 130 from which the request for the manufacture of customized underwear is made, in order for the underwear manufacturing sever 100 and the user terminal 130 of the customer to transmit the first design and the design correction items and receive the design correction option information. Moreover, the underwear design app may be downloaded from the underwear manufacturing server 100 to the user terminal 130 and installed on it. As a way of downloading, the underwear manufacturing server 100 may transmit a URL link to the user terminal 130 of a signed-up customer so that the underwear design app is installed on it, and when the customer clicks the URL, the underwear design app may be automatically downloaded to the user terminal 130 from the underwear manufacturing server 100 and installed on it, but the present disclosure is not limited to this.

The body size measurement device 110 may be connected to the underwear manufacturing server 100 via a wired or wireless communication network including the internet.

The body size measurement device 110 may generate a three-dimensional body shape of a customer who wants to purchase customized underwear by scanning the body of the customer through a three-dimensional scanner or the like and, select a preset number of points required to design a type of underwear that fits the body shape of the customer, among all points on the three-dimensional body shape, and calculate the customer's body size information required to manufacture the underwear that fits the customer's body shape, based on coordinate data values of the selected points.

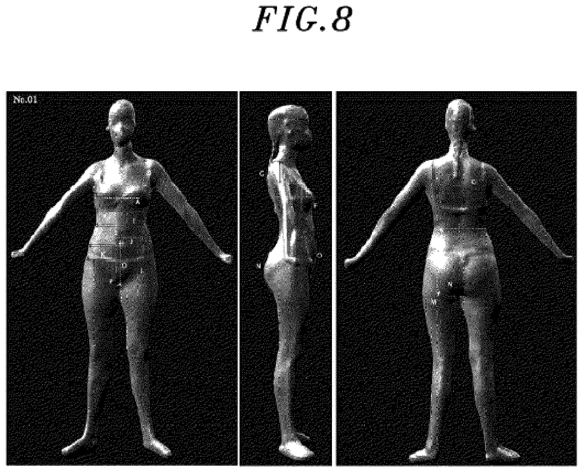

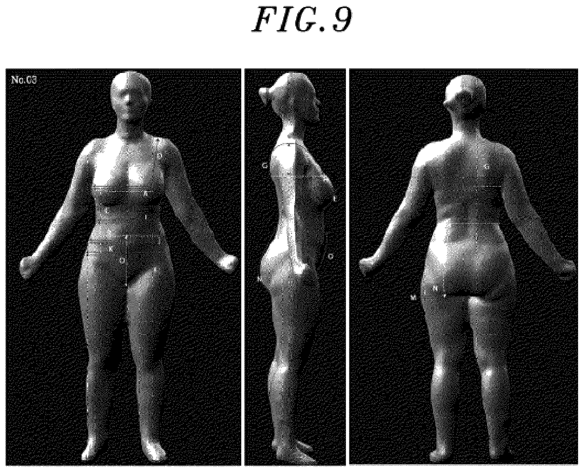

FIGS. 8 to 10 are views exemplifying a customer's three-dimensional body shape generated by a body size measurement device according to an embodiment of the present disclosure.

Each customer's body shape is different as shown in FIGS. 8 to 10. However, the conventional art has the above-described problems in that underwear such as bras or panties are manufactured only by using basic information such as bust girth, cup size, waist girth, hip girth, etc., regardless of differences in body shape between customers, which considerably lowers customer satisfaction.

Accordingly, in an embodiment of the present disclosure, a body size measurement device 110 for measuring a customer's three-dimensional body shape may be implemented, and the body size measurement device 110 allows the production of customized underwear that fits the customer's body shape by accurately generating a three-dimensional body shape of the customer through a three-dimensional scanner or the like, as shown in FIGS. 8 to 10, and calculating the customer's body size information based on the three-dimensional body shape.

Moreover, the body size measurement device 110 may transmit the above body size information measured of the customer to the underwear manufacturing server 100 to have the customer's body size information registered on the underwear manufacturing server 100. In this instance, the customer needs to sign up on the underwear manufacturing server 100 before having their body size information measured by the body size measurement device 110, and the body size measurement device 100 may perform body size measurements after authenticating an ID and password entered by the customer which the customer created earlier when signing up on the underwear manufacturing server 100, but the present disclosure is not limited to this.

Then, the body size measurement device 110 may ask the customer wishing to have their body sizes measured to enter the ID and password registered in the underwear manufacturing server 100. When the customer enters the ID and password as authentication information, the body size measurement device 110 may authenticate whether or not the customer is a valid user based on the authentication information, in conjunction with the underwear manufacturing server 100. If the customer is a valid user who is registered on the underwear manufacturing server 100, the body size measurement device 110 may generate body size information for the customer and transmit it to the underwear manufacturing server 100.

In this case, it is desirable that the customer's body size information measured by the body size measurement device 110 be transmitted to the underwear manufacturing server 100 by encryption or the like because this information is highly private information obtained while the customer is undressed and therefore requires security. Especially, the three-dimensional scanner for generating the customer's body shape may be implemented to selectively scan the body part wearing underwear.

Moreover, the body size measurement device 110 may be implemented in the form of a telephone booth and be made to have an inner space where a person can go in and stand, and the inner space may have a space for undressing and keeping clothes and a space in which three-dimensional scanning is performed. The body size measurement device 110 may be installed at a certain location in places like department stores, shopping malls, sport and recreational facilities such as swimming pools, and public buildings, where lots of people come and go, so as to provide easy access to a customer who wants to obtain their body size information based on their three-dimensional body shape. Also, the body size measurement device 110 may be mounted on a mobile object such as a vehicle by a business entity who administers the underwear manufacturing server 100 so that measurements can be made at a place where the customer is located, rather than being placed in a fixed location.

In addition, the body size measurement device 110 may have a communication means for accessing a wired or wireless communication network to connect to the underwear manufacturing server 100 and a three-dimensional scanner for generating a three-dimensional body shape of the customer's body, but the present disclosure is not limited to this.

The underwear manufacturing server 100 may refer to a server that is connected to the user terminal 130 and the body size measurement device 110 via a wired or wireless communication network such as the internet and provides customized underwear manufacturing service according to an embodiment of the present disclosure.

First, the underwear manufacturing server 100 may be connected to the body size measurement device 110 via a wired or wireless communication network, and may receive, from the body size measurement device 110, body size information measured of the customer who has signed up on the underwear manufacturing server 100 and then register and manage the customer's body size information.

In this case, the underwear manufacturing server 100 may operate in conjunction with the body size measurement device 110 to receive, from the body size measurement device 110, authentication information such as an ID and password the customer enters in the body size measurement device 110, and to check whether or not the customer signed up earlier on the underwear manufacturing server 100. Thus, once the customer is authenticated as valid, the body size measurement device 110 properly measures the body size information of the customer. The underwear manufacturing server 100 then registers the customer's body size information transmitted from the body size measurement device in conjunction with the customer's membership information. Thus, when the customer requests to customize underwear, the underwear manufacturing server 100 may make customized underwear that fits the customer's body shape based on the body size information registered for the customer.

Meanwhile, after having their body size information measured by the body size measurement device 110 as described above, the customer may access the underwear manufacturing server 100 and order their own customized underwear based on the body size information.

That is, in a case where the customer accesses a webpage or the like the server 100 created for the manufacture of customized underwear and makes a request to manufacture customized underwear, the underwear manufacturing server 100 may authenticate whether or not the customer is a valid registered customer, through a login entry box in which an ID and a password are entered.

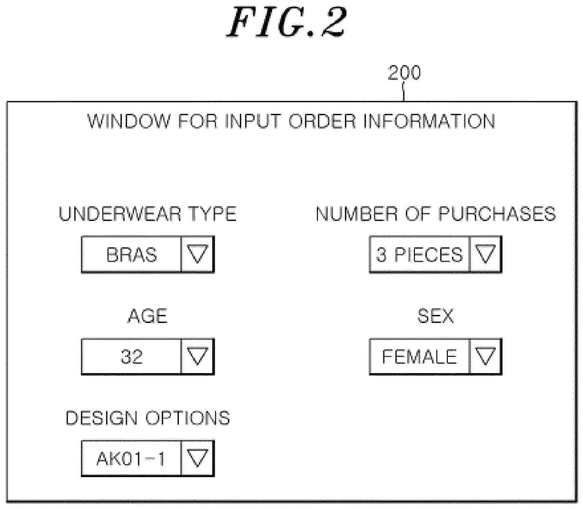

Subsequently, the underwear manufacturing server 100 may display an order entry box 200 such as shown in FIG. 2 to prompt the customer to enter order information for the manufacture of customized underwear. Accordingly, the customer enters order information needed to order customized underwear by choosing relevant order information from each category in the order entry box 200.

The order information may include, but not limited to, the category of the underwear the customer has requested to customize, the number of purchases, target underwear information, and the customer's sex, and the customer's age.

That is, upon receiving a purchase request for customized underwear through the customer's user terminal 130, the underwear manufacturing server 100 may collect order information including the age and sex of the customer who has sent the purchase request, underwear category information, and information on the target underwear the customer wants to order.

Moreover, the order entry box 200 may be implemented in such a way that default values provided by the underwear manufacturing server 100 are shown in an item where each order information is to be entered, and that the user enters order information by choosing one of the default values, but the present disclosure is not limited to this.

In addition, upon receiving a request from the customer to manufacture customized underwear, the underwear manufacturing server 100 transmits a URL link to the user terminal 130 so that the underwear design app is installed on it, and when the customer clicks the URL, the underwear design app may be automatically downloaded to the user terminal 130 and installed on it, but the present disclosure is not limited to this.

Subsequently, once the order information is properly entered through the order entry box 200, the underwear manufacturing server 100 may generate the entered order information as purchase history information for the customer who has requested to manufacture customized underwear and store it.

Furthermore, upon receiving a request to manufacture customized customer from the customer, the underwear manufacturing server 100 may recognize the customer's membership information and extract the body size information registered therein that is collected earlier for the customer, from body size information of a plurality of customers that is registered in advance. Subsequently, the underwear manufacturing server 100 may extract a basic design for the target underwear the customer has selected from the order entry box 200 and create a first design that fits the body shape of the customer by modifying the basic design based on the customer's body size information.

As used herein, the target underwear may refer to a type of underwear the customer makes a request to manufacture in the order entry box 200. That is, if the customer chooses "bra" as a category of underwear they want to purchase in the order entry box 200 and enter design options, the underwear manufacturing server 100 may have an underwear design image registered in the "bra" category appear in a separate design option window (not shown) and recognize a type of underwear corresponding to the design the customer has chosen from the design option window as the target underwear. Also, each type of underwear registered in the underwear category may be matched to a set design for each common standard size regardless of the body shape of the customer, and this set design drawn for each size may be referred to as a basic design, but the present disclosure is not limited to this.

Moreover, once the underwear manufacturing server 100 creates a first design for the target underwear that fits the customer's body shape, based on the customer's body size information, it may transmit to the customer's user terminal 130 the first design and a plurality of design correction items to be incorporated into the first design and ask the customer to enter design correction option information they want in the design correction items.

Accordingly, the customer may check the first design and the design correction items on the user terminal 130 where they are presented, and enter design correction option information they want in the design correction items. The entered design correction option information may be transmitted to the underwear manufacturing server 100 through the customer's user terminal 130, so that the underwear manufacturing server 100 may collect the design correction option information chosen by the customer, but the present disclosure is not limited to this.

In this case, the operations such as the transmission of the first design and the design correction items and the reception of the design correction option information may be performed via communication between the underwear design app installed on the user terminal 130 and the underwear manufacturing server 100, but the present disclosure is not limited to this.

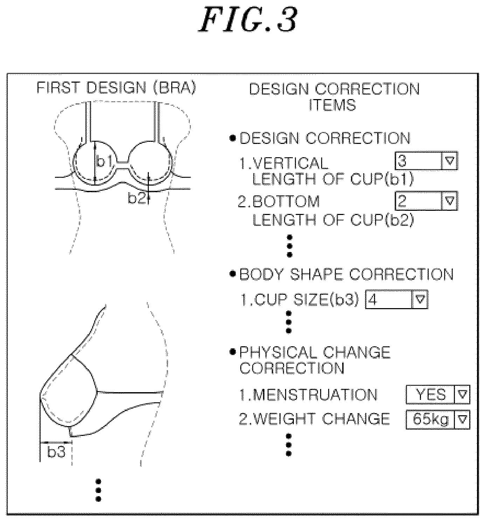

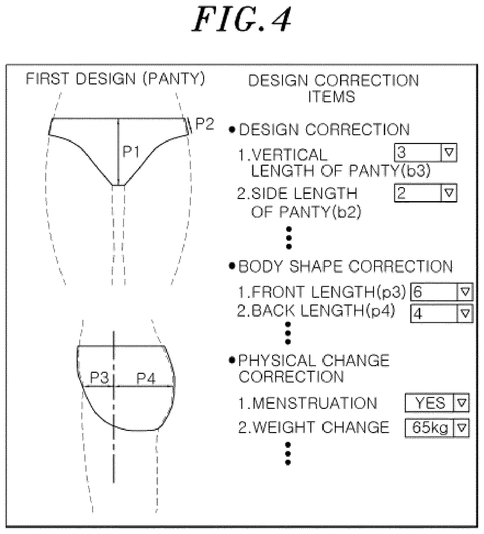

FIGS. 3 and 4 are views exemplifying a screen displayed on a user terminal, for entering design correction option information, according to an embodiment of the present disclosure.

That is, when the underwear manufacturing server 100 may configure a screen of design correction items and transmits a request to the customer's user terminal 130 to enter design correction option information, a screen as shown in FIGS. 3 and 4 may appear on the customer's user terminal 130 while the underwear design app is enabled.

Referring to FIG. 3, the first design and a design correction item screen appear on the user terminal 130, so that the customer is able to view the first design in which the target underwear corresponding to the underwear category and design they have chosen is made to fit their body shape.

In this case, if there is no need to make an additional correction to the first design, the customer may make a request to manufacture the target underwear based on the first design, or the customer may make a request to manufacture the target underwear based on their current physical state information or a second design for aesthetic satisfaction, by making a design correction, a body shape correction, or a physical change correction to the first design.

That is, since the first design is created based on the customer's body size measurements by considering how the customer would feel most comfortable while wearing the underwear, it may have no aesthetic factor(s) or no customer's physical changes incorporated in it.

Accordingly, when the customer wants to make an additional design correction since no aesthetic factor(s) or physical changes are incorporated in the first design, the customer may enter design correction option information they want in each item on the design correction item screen. Then, the design correction option information may be transmitted to the underwear manufacturing server 100 through the underwear design app, so that the underwear manufacturing server 100 is able to manufacture a second design that has the customer's preferences (aesthetic factor(s), physical change correction(s), etc.) based on the design correction option information entered by the customer.

Moreover, when the customer enters design correction option information in each option bar included in the design correction items, the underwear manufacturing server 100 may assist the customer in entering the design correction option information by displaying an altered image of the target underwear with the first design on the customer's user terminal 130 to match the design correction option information.

Meanwhile, the above-mentioned design correction items may refer to items the customer wants to make a correction to in the first design created by the underwear manufacturing server 100, and the correction included in the design correction items may include a design correction, a body shape correction, and a physical change correction, for example.

For bras, the design correction may involve correcting the size or vertical length b 1 of the cups covering the breasts to a desired length or shortening or lengthening the bottom length b2 of the cups, for example. Also, the physical change correction may involve enhancing volume and cleavage by shaping the cups to make the breasts look fuller. For example, if the customer sets the cup size b3 which is the protruding length of the cups (which may refer to the length the cups protrude from the center line of the body when viewed from the side), the underwear manufacturing server 100 may create a second design such that the volume the customer wants their breasts to have is created by calculating the thickness, size, etc. of a padding material to be inserted into each part of the cups based on body size information related to the customer's breasts.

The physical change correction may refer to a correction made by a female customer who requests to alter the cup size by checking Menstruation in the design correction option information if their breast size tends to change during a particular period of time such as their menstruation.

Moreover, the physical change correction also may refer to a correction that is made to cope with physical changes during puberty (for example, continuing changes in breast size and genital position and size in girls and continuing changes in genital position and size in boys. This can also happen during young adulthood, middle age, and old age), physical changes during ovulation (in women, soreness in the abdomen or breasts during ovulation and even severe ovulation pains), physical changes of menopause (changes in body shape associated with hormones), physical changes of pregnancy (which may be divided depending on early pregnancy, mid pregnancy, and later pregnancy and further divided by weeks), and physical changes that occur in diseases (patients with breast cancer or prostate cancer may need underwear different in size and shape than the ones they used to wear).

Besides, the physical change correction refers to a correction that is made to cope with physical changes occurring at normal times or during flight (pilots and flight attendants may experience physical changes such as swelling of the body in both men and women) or a correction that is made to adapt to physical diversity among races. That is, the size and shape of women's breasts may vary between Asians and Westerners. In general, Asian women have round, forward-facing breasts, whereas Western women's breasts are outward-facing and pointier compared to Asians. As for the sex organs, Asian women have longer genitals than Western women. The physical change correction may be made such that the customer chooses correction information they want, taking into account the above-mentioned factors.

Furthermore, for example, the customer may have had their body size information measured in advance during their period by the body size measurement device 110 and registered in the underwear manufacturing server 100, along with their body size information measured at normal times. Thus, if a physical change correction option such as Menstruation is entered as the design correction option information, the underwear manufacturing server 100 may extract the body size information registered during the customer's menstruation and design a bra that can be adapted to physical changes during menstruation.

Next, for panties, the design correction may involve correcting the vertical length P1 or side length P2 of the panty to a desired length as shown in FIG. 4, for example. That is, the customer may need a correction to the size or length of the panty depending on the design of their clothes, in which case the customer may enter design correction option information needed for design correction in the design correction item, and the underwear manufacturing server 100 creates a second design based on the size or length desired by the customer.

Furthermore, the body shape correction may involve correcting increasing volume to the front or back of the panty, for example. When the customer sets the front length P3 and the back length P4, the underwear manufacturing server 100 may create a second design so as to create the volume the customer wants, by calculating the thickness and size of a padding material to be inserted into the front and back of the panty based on three-dimensional body shape information representing the customer's crotch which is included in the customer's body size information. As used herein, the crotch may refer to male or female genitals.

Furthermore, the physical change correction may refer to a correction that is made to compensate for physical changes occurring during a specific period of time such as menstruation, and the customer may request to alter the size or length of the panty by checking Menstruation in the design correction option information.

Furthermore, upon collecting design correction option information for a plurality of design correction items from the customer's user terminal 130 that is to be incorporated into the first design, the underwear manufacturing server 100 may create a second design by modifying the first design based on the design correction option information chosen by the customer.

The second design is a modification of the first design which incorporates the design correction option information chosen by the customer - that is, information related to a design correction, a body shape correction, or a physical change correction. The second design may be set as a final design and transmitted to a patternmaking device (not shown), thereby manufacturing the target underwear.

Meanwhile, even if the target underwear is manufactured to incorporate the customer's body shape and the design correction option information chosen by the customer, the customer may not feel highly satisfied when actually wearing it.

Accordingly, the underwear manufacturing server 100 may collect dissatisfaction information from the customer who actually have worn the target underwear manufactured according to the second design and then analyze the dissatisfaction information to calculate a certain margin for the data value of each item in the body size information.

As used herein, the margin may be a value that is obtained by adjusting the data value of each item in the body size information in order to improve customer satisfaction.

Subsequently, the underwear manufacturing server 100 may continuously update the first design for the target underwear by applying the certain margin to the data value of each item in the customer's body size information. Thus, the first design for the target underwear may provide higher customer satisfaction over time than when it was originally created.

Moreover, in the process in which the customer chooses the target underwear, the underwear manufacturing server 100 may prompt the customer to choose the target underwear by sorting a preset number of types of underwear that the customer is likely to prefer most based on the age and sex of the customer and displaying them in the design option window, rather than displaying underwear of all designs registered in the underwear category chosen by the customer.

In this case, in extracting underwear that matches the customer, the underwear manufacturing server 100 may extract a preset number of types of underwear that match the customer's sex and age from all types of underwear registered for each underwear category, after retrieving preference scores for each type of underwear by sex and age based on sales of each type of underwear and ratings from previous purchasers.

Additionally, in calculating the above preference scores, the underwear manufacturing server 100 may collect ratings fed back from purchasers of each type of underwear and put together the sales of each type of underwear by sex and age and the ratings, thereby calculating the preference scores for each type of underwear by sex and age.

In this case, the above ratings may be collected through, but not limited to, the underwear design app installed on the customer's user terminal 130. That is, for example, the underwear design app installed on the customer's user terminal 130 may have a menu section where the customer can enter a rating for the target underwear manufactured according to the second design. As such, the customer may enter their rating in a rating menu section on the enabled underwear design app on the user terminal 130, and the entered rating may be transmitted to the underwear manufacturing server 100 through the customer's user terminal 130. In this case, the menu section may be enabled for a preset length of time after confirmation of the purchase of the target underwear to allow the customer to enter a rating for the target underwear, but the present disclosure is not limited to this.

Furthermore, in calculating ratings for each type of underwear, the underwear manufacturing server 100 may calculate an average of ratings from a plurality of purchasers for each type of underwear and produce the average rating as a final rating for each type of underwear. Also, the underwear manufacturing server 100 may update the final rating by continuously taking inputs of ratings fed back from purchasers of each type of underwear upon each purchase.

Furthermore, the underwear manufacturing server 100 may calculate sales of each type of underwear by sex and age based on purchase history information for each type of underwear and put together the sales and the above ratings to calculate preference scores for each type of underwear by sex and age.

In calculating the preference scores by putting together the sales and the ratings, the underwear manufacturing server 100 may calculate a first preference score for a type of underwear by sex and age in such a way as to be proportional to the sales of that type of underwear, and may check whether the average rating of that type of underwear exceeds or is less than a median value which is a criterion for positive and negative ratings. The median value may be set to, but not limited to, 50 points out of 100 which is the highest score.

Subsequently, if the average rating of that type of underwear is greater than the median value because of many positive ratings, the underwear manufacturing server 100 may calculate a second preference score by applying a preset first ratio to the ratings greater than the median value and then add together the first preference score and the second preference score to calculate a preference score for that type of underwear by sex and age. In this case, the first ratio may be set in such a way that the second preference score is not higher than the first preference score, but is not limited to this.

On the other hand, if the average rating of that type of underwear is less than the median value because of many negative ratings, the underwear manufacturing server 100 may calculate a third preference score by applying the first ratio to the ratings less than the median value and then subtract the third preference score from the first preference score to calculate a preference score for that type of underwear by sex and age. In this case, the first ratio may be set in such a way that the third preference score is not higher than the first preference score, but is not limited to this.

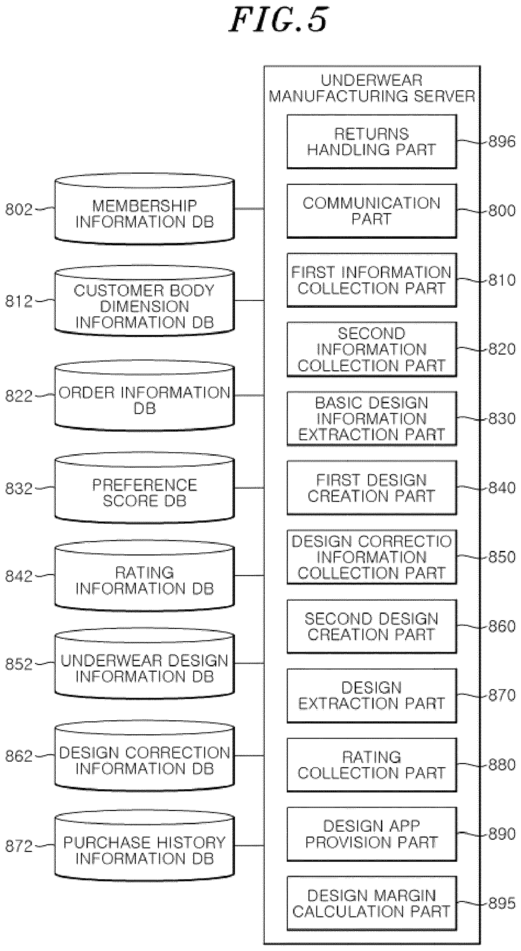

FIG. 5 is a detailed block diagram of a customized underwear manufacturing server according to an embodiment of the present disclosure.

Now, the operation of each element in the customized underwear manufacturing server will be described in more detail below with reference to FIG. 5.

First, a communication part 800 transmits and receives data to and from a body size measurement device 110. Also, the communication part 800 receives, from the body size measurement device 110, authentication information such as the ID and password of a customer whose authentication is requested, and authenticates whether or not the customer has signed up on the underwear manufacturing server 100 by referring a membership information DB 802 or the like.

Moreover, if a customer wanting to manufacture customized underwear requests for access to the underwear manufacturing server 100 through a user terminal 130, the communication part 800 receives authentication information such as an ID and a password from the user terminal 130 and performs authentication of the customer by referring to the membership information DB 802, thereby giving the user terminal 130 access to the underwear manufacturing server 100.

A first information collection part 810 is connected to the body size measurement device 110 through the communication part 800 and collects body size information measured based on the customer's three-dimensional body shape. In this case, the first information collection part 810 stores the collected body size information of the customer in a customer body size information DB 812 and manages it.

Upon receiving a purchase request for customized underwear through the customer's user terminal 130 which has gained access to the underwear manufacturing server 100, a second information collection part 820 collects order information including the age and sex of the customer who has sent the purchase request, underwear category information, and information on target underwear the customer wants to order.

In this case, in collecting the above information, the second information collection part 820 displays an order entry box 200 as shown in FIG. 2, for example, so that the customer enters order information for the manufacture of customized underwear. Accordingly, the customer enters order information for customized underwear by choosing corresponding order information in each item on the order entry box 200 shown on the user terminal 130.

The order information may include, but not limited to, the category of the underwear the customer has requested to have customized, the number of purchases, target underwear information, and the customer's sex, and the customer's age.

For example, the order entry box 200 is implemented in such a way that default values provided by the underwear manufacturing server 100 are shown in an item where each order information is to be entered, and that the user enters order information by choosing one of the default values, but the present disclosure is not limited to this. In this case, the customer's order information may be stored in an order information DB 822.

Once the order information is properly entered through the order entry box 200, the second information collection part 820 may generate the entered order information as purchase history information for the customer who has requested to manufacture customized underwear and store it.

Upon receiving a request from the customer to manufacture customized underwear, a design app provision unit 890 transmits a URL link to the user terminal 130 so that the underwear design app is installed on it, and when the customer clicks the URL, the underwear design app may be automatically downloaded to the user terminal 130 and installed on it.

Upon receiving a request to manufacture customized customer from the customer, a basic design information extraction part 830 may recognize the customer's membership information and extract the body size information registered therein that is collected earlier for the customer, from body size information of a plurality of customers that is registered in advance, by referring to the customer body size information DB 812.

A first design creation part 840 may create a first design that fits the body shape of the customer by extracting a basic design for the target underwear the customer has selected from the order entry box 200 and modifying the basic design based on the customer's body size information. That is, the first design may refer to a design that is created specifically for each customer so as to manufacture underwear that fits each customer's three-dimensional body shape as shown in FIGS. 8 to 10.

As used herein, the target underwear may refer to a type of underwear the customer makes a request to manufacture in the order entry box 200. That is, if the customer chooses "bra" as a category of underwear they want to purchase in the order entry box 200 and enter design options, the underwear manufacturing server 100 may have an underwear design image registered in the "bra" category appear in a separate design option window (not shown) and recognize a type of underwear corresponding to the design the customer has chosen from the design option window as the target underwear. Also, each type of underwear registered in the underwear category may be matched to a set design for each common standard size regardless of the body shape of the customer, and this set design drawn for each size may be referred to as a basic design, but the present disclosure is not limited to this.

Once a design correction information collection part 850 creates a first design for the target underwear that fits the customer's body shape, based on the customer's body size information, it may transmit to the customer's user terminal 130 the first design and a plurality of design correction items to be incorporated into the first design and ask the customer to enter design correction option information they want in the design correction items.

Accordingly, the customer may check the first design and the design correction items on the user terminal 130 where they are presented, and enter design correction option information they want in the design correction items. The entered design correction option information may be transmitted to the design correction information collection part 850 through the customer's user terminal 130, so that the design correction information collection part 850 may collect the design correction option information chosen by the customer, but the present disclosure is not limited to this.

In this case, the operations such as the transmission of the first design and the design correction items and the reception of the design correction option information may be performed through the underwear design app installed on the user terminal 130, but the present disclosure is not limited to this.

In this case, the above-mentioned design correction items may refer to items the customer wants to make a correction to in the first design created by the underwear manufacturing server 100, and the correction included in the design correction items may include a design correction, a body shape correction, and a physical change correction, for example.

Moreover, the design correction information collection part 850 may store the collected design correction option information of each customer in a design correction information DB 862 and manages it.

In addition, when the customer enters design correction option information in each option bar included in the design correction items, the design correction information collection part 850 may assist the customer in entering the design correction option information by displaying an altered image of the target underwear with the first design on the customer's user terminal 130 to match the design correction option information.

Upon collecting design correction option information for a plurality of design correction items from the customer's user terminal 130 that is to be incorporated into the first design, a second design creation part 860 may create a second design by modifying the first design based on the design correction option information chosen by the customer.

The second design is a modification of the first design which incorporates the design correction option information chosen by the customer - that is, information related to a design correction, a body shape correction, or a physical change correction. The second design may be set as a final design and transmitted to a patternmaking device (not shown), thereby manufacturing the target underwear.

Accordingly, a design margin calculation part 895 may collect dissatisfaction information from the customer who actually have worn the target underwear manufactured according to the second design and then analyze the dissatisfaction information to calculate a certain margin for the data value of each item in the body size information. Subsequently, the design margin calculation part 895 may continuously update the first design for the target underwear by applying the certain margin to the data value of each item in the customer's body size information. Thus, the first design of the target underwear may provide higher customer satisfaction over time than when it was originally created.

A rating collection part 880 may collect ratings fed back from purchasers of each type of underwear. In this case, the above ratings may be collected through, but not limited to, the underwear design app installed on the customer's user terminal 130. That is, for example, the underwear design app installed on the customer's user terminal 130 may have a menu section where the customer can enter a rating for the target underwear manufactured according to the second design. As such, the customer may enter their rating in a rating menu section on the enabled underwear design app on the user terminal 130, and the entered rating may be transmitted to the rating collection part 880 through the customer's user terminal 130. In this case, the menu section may be enabled for a preset length of time after a decision to purchase the target underwear is made to allow the customer to enter a rating for the target underwear, but the present disclosure is not limited to this.

In this case, the ratings for each type of underwear collected by the rating collection part 880 may be stored in a rating DB 842.

Moreover, in the process in which the customer chooses the target underwear, the second information collection part 820 may prompt the customer to choose the target underwear by sorting a preset number of types of underwear that the customer is likely to prefer most based on the age and sex of the customer and displaying them in the design option window, rather than displaying underwear of all designs registered in the underwear category chosen by the customer.

A design extraction part 870 may operate in conjunction with the second information collection part 820 and, upon receiving target underwear option information from the customer, calculate preference scores for each type of underwear by sex and age based on sales of each type of underwear and ratings from previous purchaser and then extract and provide a preset number of types of underwear that match the customer's sex and age based on the calculated preference scores. In this case, the design extraction part 870 may calculate the sales of each type of underwear by sex and age based on purchase history information for each type of underwear.

Moreover, the design extraction part 870 may extract matching underwear from all types of underwear by referring to an underwear design information DB 852 storing information on designs of all types of underwear for each underwear category.

In addition, in calculating ratings for each type of underwear to be applied to the calculation of preference scores, the design extraction part 870 may calculate an average of ratings from a plurality of purchasers for each type of underwear upon purchase and produce the average rating as a final rating for each type of underwear. Also, the design extraction part 870 may update the final rating by continuously taking inputs of ratings fed back from purchasers of each type of underwear upon each purchase.

In calculating the above preference scores, the design extraction part 870 may calculate a first preference score for a type of underwear by sex and age in such a way as to be proportional to the sales of that type of underwear, and may check whether the average rating of that type of underwear exceeds or is less than a median value which is a criterion for positive and negative ratings. The median value may be set to, but not limited to, 50 points out of 100 which is the highest score.

Subsequently, if the average rating of that type of underwear is greater than the median value because of many positive ratings, the design extraction part 870 may calculate a second preference score by applying a preset first ratio to the ratings greater than the median value and then add together the first preference score and the second preference score to calculate a preference score for that type of underwear by sex and age. In this case, the first ratio may be set in such a way that the second preference score is not higher than the first preference score, but is not limited to this.

On the other hand, if the average rating of that type of underwear is less than the median value because of many negative ratings, the design extraction part 870 may calculate a third preference score by applying the first ratio to the ratings less than the median value and then subtract the third preference score from the first preference score to calculate a preference score for that type of underwear by sex and age. In this case, the first ratio may be set in such a way that the third preference score is not higher than the first preference score, but is not limited to this.

In addition, the design extraction part 870 may store the above calculated preference scores in a preference score DB 832 and manage it.

A returns handling part 896 processes a return request for the target underwear manufactured according to the second design.

In the handling of returns, the underwear design app installed on the customer's user terminal 130 may have a returns menu section where the customer can request a return of the target underwear manufactured according to the second design, and the customer may request a return for the target underwear manufactured according to the second design if they want, by using the returns menu section.

In this case, the returns menu section provided on the underwear design app may be enabled for a preset length of time after completion of the delivery of the target underwear so that the customer makes a return request for the target underwear, but the present disclosure is not limited to this.

The return request may be sent to the underwear manufacturing server 100 through the customer's user terminal 130 and collected by the returns handling part 896.

Meanwhile, the returns handling part may be implemented to allow the customer to return the target underwear for free if the return request is eligible for a one-time free return, but the present disclosure is not limited to this.

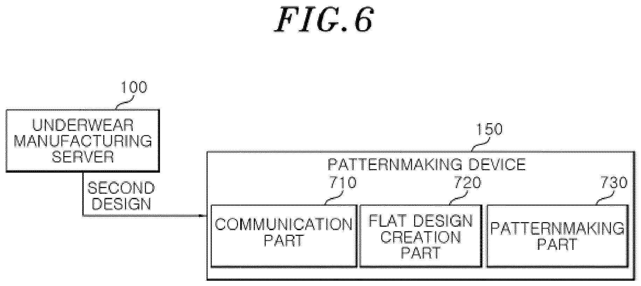

FIG. 6 is a detailed block diagram of a patternmaking device according to an embodiment of the present disclosure.

The patternmaking device 150 refers to a device connected to the underwear manufacturing server 100 via a wired or wireless communication network, that, if receiving a second design for the target underwear applied to the underwear manufacturing server 100, cuts fabric to manufacture the target underwear according to the second design.

The patternmaking device 150 may include a communication part 710, a flat design creation part 720, and a patternmaking part 730.

The communication part 710 transmits and receives data to and from the underwear manufacturing server 100 via a wired or wireless communication network.

The flat design creation part 720 receives second design information for the target underwear the customer has requested to manufacture from the underwear manufacturing server 100 through the communication part 710 and converts the three-dimensional second design into a flat design.

That is, since the second design is created based on body size information calculated from a three-dimensional body shape generated by three-dimensionally scanning the body of the customer who has requested to manufacture customized underwear, it may be generated as a three-dimensional design that reflects the customer's three-dimensional body shape. Accordingly, it is necessary to convert the second design into a flat design, in order to draft a pattern on a flat surface according to the three-dimensional second design.

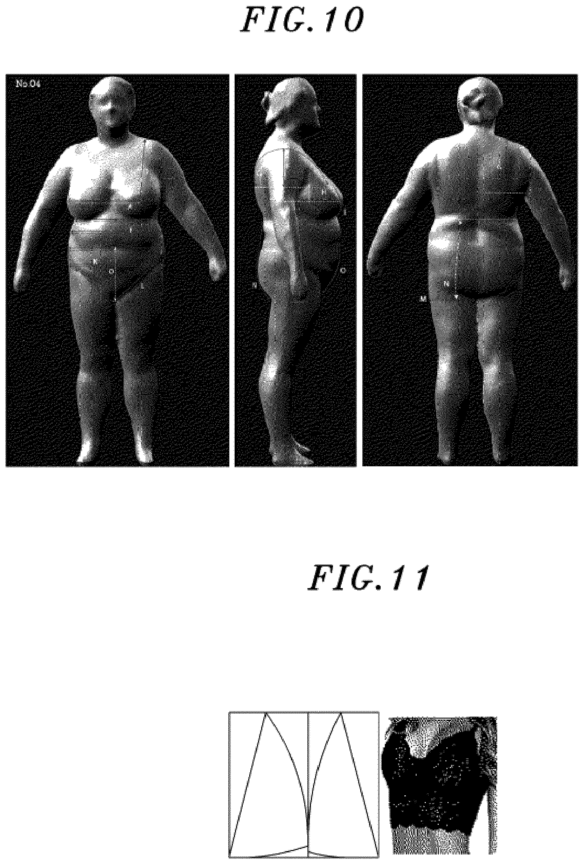

That is, in the conventional art, bra cups are generally made out of only two pieces of fabric cut to a pattern, as shown in FIG. 11, based on the customer's body size information such as manual measurements of the upper bust girth, under bust girth, etc. of the customer.

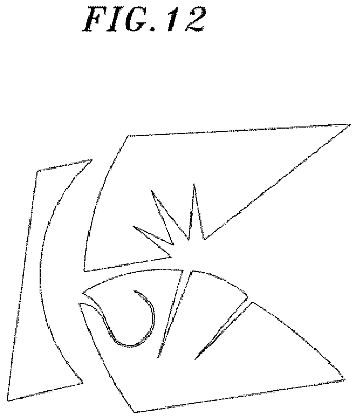

However, in the present disclosure, 10 or more fabric pattern pieces may be created as shown in FIG. 12, by performing patternmaking based on the three-dimensional second design, thereby enabling the manufacture of underwear that perfectly fits the customer's body.

The patternmaking part 730 cuts fabric for the target underwear based on the flat representation of the second design created by the flat design creation part 720. In this case, different patterns and pieces may be created for each customer as shown in FIG. 12, since they are drafted on a flat surface based on the flat representation of the three-dimensional second design.

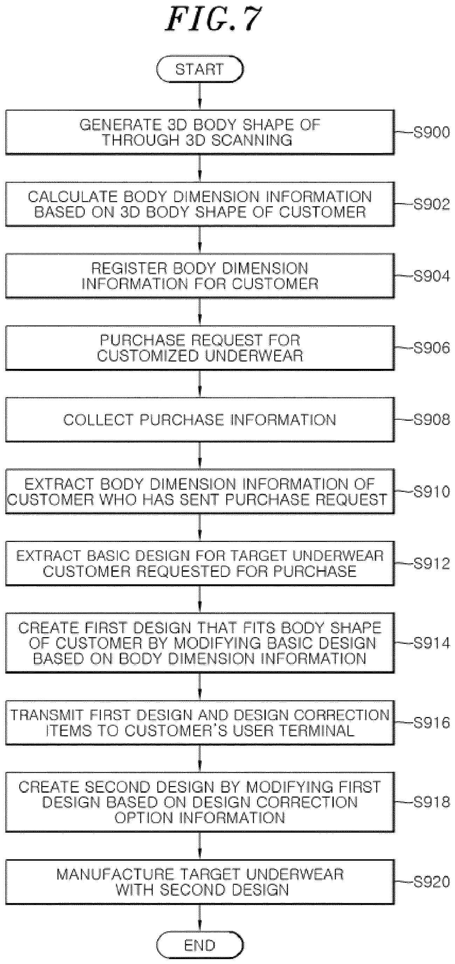

FIG. 7 illustrates a control flow of the operation of an underwear manufacturing server according to an embodiment of the present disclosure. Now, the embodiment of the present disclosure will be described in detail with reference to FIGS. 1 to 12.

First, when a customer has their body sizes measured by a body size measurement device 110 installed in a department store, a swimming pool, a shopping mall, a public building, or a mobile object such as a vehicle in order to order customized underwear, the body size measurement device 110 generates a three-dimensional body shape of the customer by three-dimensionally scanning the customer's body (S900) and then calculates body size information based on the three-dimensional body shape of the customer (S902).

Subsequently, the above calculated body size information for the customer is transmitted from the body size measurement device 110 to an underwear manufacturing server 100 via a wired or wireless communication network, and the underwear manufacturing server 100 registers and manages the body size information for the customer (S904).

Thus, after having their body size information measured by the body size measurement device 110 as described above, the customer may access the underwear manufacturing server 100 and order their own customized underwear based on the body size information.

Next, when the customer who has their body size information registered as described above accesses a webpage or the like the server 100 created for the manufacture of customized underwear and makes a request to manufacture customized underwear, the underwear manufacturing server 100 may authenticate whether or not the customer is a valid registered customer, through a login entry box in which an ID and a password are entered.

Subsequently, the underwear manufacturing server 100 may display an order entry box 200 such as shown in FIG. 2 to prompt the customer to enter order information for the manufacture of customized underwear. Accordingly, the customer enters order information needed to order customized underwear by choosing relevant order information from each category in the order entry box 200 (S906).

Then, upon receiving a purchase request for customized underwear through the customer's user terminal 130, the underwear manufacturing server 100 may collect order information including the age and sex of the customer who has sent the purchase request, underwear category information, and information on the target underwear to be ordered (S908).

Next, the underwear manufacturing server 100 may recognize the membership information for the customer who has requested to manufacture customized customer, and extract the body size information registered therein that is collected earlier for the customer, from body size information of a plurality of customers that is registered in advance (S910).

Subsequently, the underwear manufacturing server 100 may extract a basic design for the target underwear the customer has selected from the order entry box 200 (S912) and create a first design that fits the body shape of the customer by modifying the basic design based on the customer's body size information (S914).

As used herein, the target underwear may refer to a type of underwear the customer makes a request to manufacture in the order entry box 200. That is, if the customer chooses "bra" as a category of underwear they want to purchase in the order entry box 200 and enter design options, the underwear manufacturing server 100 may have an underwear design image registered in the "bra" category appear in a separate design option window (not shown) and recognize a type of underwear corresponding to the design the customer has chosen from the design option window as the target underwear. Also, each type of underwear registered in the underwear category may be matched to a set design for each common standard size regardless of the body shape of the customer, and this set design drawn for each size may be referred to as a basic design, but the present disclosure is not limited to this.

Next, once the underwear manufacturing server 100 creates a first design for the target underwear that fits the customer's body shape, based on the customer's body size information, it may transmit to the customer's user terminal 130 the first design and a plurality of design correction items to be incorporated into the first design and ask the customer to enter design correction option information they want in the design correction items (S916).

Accordingly, the customer may check the first design and the design correction items on the user terminal 130 where they are presented, and enter design correction option information they want in the design correction items. The entered design correction option information may be transmitted to the underwear manufacturing server 100 through the customer's user terminal 130, so that the design correction option information chosen by the customer is collected.

Then, upon collecting design correction option information for a plurality of design correction items from the customer's user terminal 130 that is to be incorporated into the first design, the underwear manufacturing server 100 may create a second design by modifying the first design based on the design correction option information chosen by the customer (S918).

The second design is a modification of the first design which incorporates the design correction option information chosen by the customer - that is, information related to a design correction, a body shape correction, or a physical change correction. The second design may be set as a final design and transmitted to a patternmaking device (not shown), thereby manufacturing the target underwear (S920).

According to an embodiment of the present disclosure, in a system for manufacturing customized underwear for a customer, it is possible to generate a 3D body shape of a customer through 3D scanning, calculate, from the 3D body shape, unique body size information for each customer, needed for manufacturing customized underwear, and register the information, and then, if a customized purchase request for underwear is received from the customer, generate, for the target underwear requested for purchase, a design that fits the body shape of the customer on the basis of the registered body size information for each customer, and thereby maximize customer satisfaction and reduce inventory.

While the present disclosure has been described with reference to the illustrated drawings, it will be apparent that the disclosure is not limited to the embodiments and drawings disclosed herein and that various modifications may be made by those skilled in the art within the scope of the technical idea of the disclosure. Further, although operations and effects according to the configuration of the present disclosure are not explicitly described in the foregoing detailed description of embodiments, it is natural that any effects predictable by the configuration also belong to the scope of the present disclosure.

### Industrial Applicability

A customized underwear manufacturing system according to the present disclosure may be used to manufacture customize underwear with an improvement in customer satisfaction by creating a design that fits a customer's body shape.

## Claims

1. A system for manufacturing underwear customized for a customer, the system comprising:
a body size measurement device that generates a three-dimensional body shape of a customer by three-dimensionally scanning a body of the customer, selects a preset number of points required to design a type of underwear that fits the body shape of the customer, among points making up the three-dimensional body shape, and calculates body size information of the customer based on coordinate data values of the selected points; and
an underwear manufacturing server connected to the body size measurement device via a wired or wireless communication network, that receives the body size information of the customer, who has signed up on the underwear manufacturing server, and manufactures customized underwear based on the body size information,
wherein the underwear manufacturing server comprises:
a communication part connected to the wired or wireless communication network to transmit and receive data to and from the body size measurement device;
a first information collection part connected to the body size measurement device through the communication part to collect the customer's body size information;
a second information collection part that, upon receiving a purchase request for customized underwear through the customer's user terminal, collects order information including information on age and sex of the customer who has sent the purchase request, underwear category information, and information on target underwear the customer wants to order;
a basic design information extraction part that, upon receiving the purchase request from the customer, recognizes membership information of the customer and extracts the body size information that is previously collected for the customer, from among body size information of a plurality of customers;
a first design creation part that creates a first design that fits the body shape of the customer by extracting a basic design for the target underwear and modifying the basic design based on the customer's body size information;
a design correction information collection part that transmits to a user terminal of the customer the first design and a plurality of design correction items to be applied to the first design and asks the customer to enter design correction option information the customer wants in the design correction items, and then collects the design correction option information chosen through the customer's user terminal; and
a second design creation part that creates a second design by modifying the first design based on the design correction option information chosen by the customer.

2. The system of claim 1, wherein the underwear manufacturing server further comprises a design margin calculation part that collects dissatisfaction information from the customer with respect to the target underwear manufactured according to the second design and calculates a certain margin for the data value of each item to improve the customer's satisfaction,
wherein the first design creation part continuously updates the first design for the target underwear by applying the certain margin to the data value of each item.

3. The system of claim 2, wherein the design correction items comprise a design correction item, a body shape correction item, and a physical change correction item,
wherein the design correction information collection part collects the design correction option information the customer chooses from each option bar included in the design correction items, and
the second design creation part creates the second design by modifying the first design based on the design correction option information chosen by the customer.

4. The system of claim 2, wherein, when the customer enters design correction option information in each option bar included in the design correction items, the design correction information collection part modifies an image of the target underwear displayed as the first design on the customer's user terminal to match the design correction option information and displays the modified image on the customer's user terminal.

5. The system of claim 1, wherein, upon receiving the purchase request, the second information collection part displays an order entry box showing various order information option bars where the customer inputs order information, and collects the order information based on information chosen by the customer through the order information option bars.

6. The system of claim 5, wherein, in collecting information on the target underwear, when an underwear category is chosen through an underwear category option bar which is one of the order information option bars on the order entry box, the second information collection part displays design images of all types of underwear registered in the chosen underwear category and then collects, as the target underwear, the type of underwear corresponding to a design image chosen by the customer, among the design images of all types of underwear.

7. The system of claim 6, wherein the underwear manufacturing server further comprises:
a rating collection part that collects ratings fed back from purchasers of each type of underwear; and
a design extraction part that calculates preference scores for each type of underwear by sex and age based on sales of each of all types of underwear registered for each underwear category and the ratings and then extracts a preset number of types of underwear that match the customer's sex and age,
wherein, in collecting the target underwear information, when an underwear category is chosen through the underwear category option bar which is one of the order information option bars on the order entry box, the second information collection part displays design images of the preset number of types of underwear, among all types of underwear registered in the chosen underwear category, and then collects, as the target underwear, the type of underwear corresponding to one design image chosen by the customer, among the design images of all types of underwear.

8. The system of claim 7, wherein the underwear manufacturing server further comprises a purchase history information DB storing purchase information of previous purchasers of each type of underwear, and
the design extraction part calculates sales of each type of underwear by sex and age based on the sexes and ages of purchasers of each type of underwear stored in the purchase history information DB.

9. The system of claim 8, wherein the design extraction part calculates an average of ratings from a plurality of purchasers for each type of underwear collected by the rating collection part and produce the average rating as a final rating for each type of underwear.

10. The system of claim 9, wherein the design extraction part updates the final rating by continuously taking, from the rating collection part, inputs of ratings fed back from purchasers of each type of underwear upon each purchase.

11. The system of claim 10, wherein the design extraction part calculates a first preference score for each type of underwear by sex and age in such a way as to be proportional to the sales of each type of underwear, and checks whether the average rating of each type of underwear exceeds or is less than a median value which is a criterion for positive and negative ratings, and
when the average rating of each type of underwear is greater than the median value due to positive ratings therefor, the design extraction part calculates a second preference score by applying a preset first ratio to the ratings greater than the median value and then adds together the first preference score and the second preference score to calculate a preference score for each type of underwear by sex and age.

12. The system of claim 11, wherein, when the average rating of each type of underwear is less than the median value due to negative ratings therefor, the design extraction part calculates a third preference score by applying the first ratio to the ratings less than the median value and then subtracts the third preference score from the first preference score to calculate a preference score for each type of underwear by sex and age.

13. The system of claim 7, wherein the underwear manufacturing server further comprises a design app provision unit that allows an underwear design app to be downloaded onto the customer's user terminal to enable communication with the underwear manufacturing server and installed on the customer's user terminal, and
the design correction information collection part transmits, to the customer's user terminal where the underwear design app is enabled, the first design and a plurality of design correction items to be applied to the first design and collects the design correction option information chosen through the customer's user terminal.

14. The system of claim 13, wherein the underwear design app has a rating menu section through which a rating for the target underwear manufactured according to the second design is input,
wherein the rating menu section is enabled for a preset length of time after confirmation of the purchase of the target underwear to allow the customer to input a rating for the target underwear, and
the rating from the customer is transmitted to the underwear manufacturing server through the customer's user terminal and collected by the rating collection part.

15. The system of claim 1, wherein the underwear category comprises a bra category or a panties category.

16. The system of claim 3, wherein the second design is generated as a three-dimensional design that corresponds to the customer's three-dimensional body shape, and
the system further comprises a patternmaking device connected to the underwear manufacturing server, that receives the second design from the second design creation part and performs pattern making to manufacture the target underwear according to the second design,
wherein the patternmaking device comprises:
a flat design creation part that converts the second design into a flat design, in order to perform flat patterning according to the three-dimensional second design; and
a patternmaking part that performs flat patterning for the target underwear corresponding to the second design by cutting fabric for the target underwear based on the flat design.

17. The system of claim 14, wherein the underwear manufacturing server further comprises a returns handling part that processes a return request for the target underwear manufactured according to the second design, and
the underwear design app has a returns menu section through which the customer requests a return of the target underwear manufactured according to the second design,
wherein the returns menu section is enabled for a preset length of time after completion of the delivery of the target underwear to allow the customer to make a return request for the target underwear,
wherein the return request is transmitted to the underwear manufacturing server through the customer's user terminal and collected by the returns handling part, and
wherein the return handling part performs a return process for free only when the return request is the first return request for the target underwear.
